Europäisches Patentamt

European Patent Office

Office européen des brevets

(11) Veröffentlichungsnummer: **0 307 020 B1**

## EUROPÄISCHE PATENTSCHRIFT

(45) Veröffentlichungstag der Patentschrift: **17.06.92**

(21) Anmeldenummer: **88201713.0**

(22) Anmeldetag: **19.07.88**

Verbunden mit 88907076.9/0368923
(europäische
Anmeldenummer/Veröffentlichungsnummer)
durch Entscheidung vom 07.06.91.

(51) Int. Cl.⁵: **F16H 25/14**, F01B 9/04

(54) **Motor mit Kreuzkurbeltrieb.**

(30) Priorität: **20.07.87 DE 3723929**

(43) Veröffentlichungstag der Anmeldung:
**15.03.89 Patentblatt 89/11**

(45) Bekanntmachung des Hinweises auf die
Patenterteilung:
**17.06.92 Patentblatt 92/25**

(84) Benannte Vertragsstaaten:
**AT BE CH DE FR GB GR IT LI LU NL SE**

(56) Entgegenhaltungen:
DE-A- 494 867          DE-C- 336 956
DE-C- 409 919          DE-C- 727 756
DE-C- 920 758          US-A- 1 369 445

(73) Patentinhaber: **ALBEK & PARTNER GMBH**
**Ludwigstrasse 32**
**W-6730 Neustadt(DE)**

(72) Erfinder: **Wendel, Normann**
**Flugplatzstrasse 14**
**W-6730 Neustadt 18(DE)**
Erfinder: **Dönitz, Kurt**
**Fuchsfarmstrasse 3**
**W-6730 Neustadt(DE)**

(74) Vertreter: **Patentanwälte Zellentin & Partner**
**Rubensstrasse 30**
**W-6700 Ludwigshafen(DE)**

## Beschreibung

Die vorliegende Erfindung betrifft einen Motor mit Kreuzkurbeltrieb, mit dessen Hilfe eine lineare reversierende Bewegung unter Verwendung eines Rotationsantriebes und umgekehrt aus einer linearen eine Rotationsbewegung erzeugt werden kann.

Bekannt sind Vorrichtungen, bei denen die Umsetzung der Rotationsbewegung in eine lineare und umgekehrt mit Hilfe von Pleueln erfolgen, die z.B. an Kurbelwellen oder Schwungscheiben einerseits und an einem in einem Zylinder geführten Kolben andererseits angelenkt sind. Diese Art der Bewegungsumsetzung bedingt jedoch ein ständiges Schwingen des Pleuels und dadurch verursacht, einen ständig wechselnden Kraftangriff oder umgekehrt -abgriff an den Kolben, ebenso wie ein ständiges Kippen des Kolbens.

Bekannt ist weiterhin ein Kreuzkurbeltrieb mit einer in einem Gestell drehbar gelagerten Kurbel, die mit einem Zapfen im Betrieb in Schlitze eines Schlittens eingreift, der in einer Kulisse geführt ist, und so diesen treibt; Volmer, J.: Getriebetechnik, Lehrbuch, VEB-Verlag Technik, Berlin (1972, S. 407). Diese Vorrichtung ist jedoch nicht in der Lage, aus einer Rotationsbewegung eine reversierende Schlittenbewegung zu erzeugen, dazu müßte auch die Kurbel reversiert werden.

Aus der US-A 1 369 445 ist ein Verbrennungsmotor mit einem Kreuzkurbeltrieb bekannt, der jedoch keine Vorverdichtung auf der Kolbenunterseite ermöglicht.

Aus der DE-C 409 919 und der DE-C 727 756 sind vorverdichtende Motoren bekannt, bei welchen die Kolbenbewegung über eine Kurbelschleife auf eine Kurbelwelle einwirkt. In beiden Fällen bewirkt jedoch die Kurbelschleife nur einen zum Schleifenradius direkt proportionalen Kolbenweg. Die DE-C 409 919 bezieht sich dabei auf eine Zweitaktverbrennungsmaschine mit zwei gegenüberliegenden Zylindern, bei welchen Pumpenräume vorgesehen sind, in welchen das Brennstoffluftgemisch vorverdichtet wird. Die Pumpenräume sind vom die Kurbelschleife beherbergenden Gehäuse abgetrennt, der Einlaß zum Pumpenraum sowie Überström- und Auspuffkanal werden vom Kolben gesteuert. Eine Kolbenwegvergrößerung ist hierbei nur über eine Vergrößerung des Kurbelradius möglich, was zu entsprechenden Unwuchten und Gehäusevergrößerungen führen würde.

Die vorliegende Erfindung hat sich daher die Aufgabe gestellt, Motoren mit derartigen Schubstangentrieben zu schaffen, die längere Kolbenwege ermöglichen, ohne einen Kurbelweg vergrößern zu müssen, was neben der Verminderung von Unwucht-, Trägheits- und Schwingungsproblemen auch den Vorteil mit sich bringen soll, in den oberhalb und unterhalb des Kolbens liegenden Zylinderräumen mehr freien Raum für die (Vor)-Verdichtung und gegebenenfalls erforderliche Einbauten zur Verfügung zu stellen.

Die Lösung dieser Aufgabe gelingt bei einem Motor, bestehend aus mindestens einem Zylinder mit einem oberhalb des Kolbens liegenden Verdichtungsraum sowie einem unterhalb des Kolbens liegenden Vorverdichtungsraum, wobei der Kolben durch eine Schubstange mit linearer Bewegung bewegt wird und die Schubstange gegen das die Schubstange in lineare Bewegung versetzende Getriebe abgedichtet ist, erfindungsgemäß dadurch, daß das Getriebe ein Kreuzkurbeltrieb mit einer in einem Gestell drehbaren Kurbel ist, die mit Zapfen im Betrieb in Schlitze eines Schlittens eingreift, der in Kulissen geführt ist, wobei die Kurbel zwei unter einem Winkel von 90° zur Kurbeldrehachse angeordnete Zapfen aufweist, wobei der Schlitten zwei sich unter einem Winkel von 90° kreuzende Schlitze besitzt, die jeweils unter einem Winkel von 45° zur Schubrichtung des Schlittens verlaufen und wobei im Betrieb im ersten Schlitz der erste Zapfen und im zweiten Schlitz der zweite Zapfen geführt ist.

Mit einer derartigen Anordnung wird gegenüber den bekannten Motoren gegenüber dem Kurbelradius ein wesentlich größerer Hub erreicht, bei gleichzeitig verbesserten Übertragungswinkeln z.B gegenüber Kurbeltrieben mit Bewegungsübertragung durch nur einen Zapfen.

Die Funktion der Erfindung besteht darin, daß die Zapfen gegen die unter 45° zur Schlittenbewegungsrichtung angeordneten Schlitzflanken anliegen und diese bei Rotation verschieben und umgekehrt bei Druck auf die Zapfen diese in eine Kreisbewegung versetzen. Dabei verbleiben die Zapfen in den unter 90° zueinander angeordneten Schlitzen, d.h. sie wechseln diese nicht, woraus ein entscheidender Vorteil der vorliegenden Erfindung resultiert, der darin besteht, daß immer mindestens ein Zapfen mit den Schlitzen in Verbindung bleibt, insbesondere dann, wenn der andere durch den offenen Kreuzungspunkt hindurchläuft.

Bei der erfindungsgemäßen Vorrichtung treten obere und untere Totpunkte auf und zwar in dem Moment, wenn die Verbindungslinie der Zapfen die Bewegungsrichtung des Schlittens unter 90° schneidet.

Für den Fall, daß aus der translatorischen Bewegung des Schlittens eine Rotation der Zapfen bewirkt werden soll, wird daher weiterhin vorgeschlagen, die Zapfen auf einer Schwungscheibe anzuordnen.

Um die Reibung der Zapfen an den Kulissenflanken zu vermindern, können diese in einfacher Weise mit Drehlagern, wie z.B. Kugellagern versehen werden, die auf den Flanken abrollen, oder aber die Zapfen können selbst drehbar gelagert sein.

Insbesondere können Flanken und Zapfen auch miteinander verzahnt sein wodurch ein besonders ruhiger Lauf der Vorrichtung erzielt wird.

Die Schlitze können im einfachsten Falle einseitige, X-förmig zueinander angeordnete offene Flanken sein, da die Zapfen bei Beibehaltung des Drehsinnes lediglich an diesen anliegen.

Vorgezogen wird jedoch eine Ausbildung als sich kreuzende Schlitze, bei denen sich somit symmetrisch gleiche Schlitze gegenüberliegen. Es ist auch grundsätzlich möglich, die Schlitze derart offen zu gestalten, daß die Flanken zwei gegenüberliegende Winkel in V-Form bilden, wobei ein Abstand zwischen deren Spitzen belassen ist, der zum Durchgang der Zapfen erforderlich ist, wobei aber nicht ständig beide Zapfen oder umgekehrt Flanken treiben.

Die Schlitze laufen in Halbkreisschalen aus, deren Durchmesser geringfügig größer ist, als derjenige der Zapfen oder der gegebenenfalls auf diesen laufenden Kugellager, so daß die Schlitze zu diesen ein ausreichendes Spiel besitzen.

Mit der vorliegenden Erfindung können mit Vorteil die eingangs erwähnten Kolbenantriebe hergestellt werden, wobei die Schlitten mit diesen zugeordneten Kolben verbunden sind. Dabei kann besonders vorteilhaft der Kolben starr am Schlitten angeordnet sein, da Pleuellager nicht mehr erforderlich sind. Insbesondere kann auch der Schlitten zwischen zwei durch die Zapfen und gegebenenfalls eine Welle verbundenen Scheiben angeordnet sein. Die Zapfen sind hierbei im Schlitten bzw. dessen Schlitzen, wie oben beschrieben, geführt, wobei die Befestigung der Scheiben durchaus mit Hilfe der Zapfen allein vorgenommen werden kann.

Falls die Welle ebenfalls als Verbindungsglied dienen soll, so wird vorgeschlagen, den Schlitten mit einem sich in Bewegungsrichtung erstreckenden axialen Durchbruch zu versehen, die gegenüber der Achse ein allseitiges Spiel beläßt.

Insbesondere sind dabei die Zapfen und gegebenenfalls der Mittelachse Schwungscheiben zugeordnet, die die Totpunkte mit Hilfe ihres Trägheitsmomentes überwinden.

Die unterschiedlichen erforderlichen Taktzeiten sind dabei unschwer durch eine um den gewünschten Winkel versetzte Anordnung der benachbarten Zapfen zu erreichen.

Der erfindungsgemäße Kreuzkurbeltrieb zeigt hinsichtlich der Kreuzschlittengeschwindigkeit und der Kreuzschlittenbeschleunigung einfache und damit beherrschbare Sinusverläufe gegenüber dem Schubkurbeltrieb. Darüber hinaus ist der Hub um über 40 % höher. Wegen der fehlenden Pendelbewegung der Pleuelstange treten damit verbundene störende Schwingungen nicht auf. Außerdem müssen keine Massenkräfte höherer Ordnung berücksichtigt werden, welche beim Schubkurbeltrieb für Resonanzerscheinungen im höheren Drehzahlbereich verantwortlich sind, woraus sich ein besseres Schwingungsverhalten herleitet. Höher harmonische Anteile entfallen somit, was die Laufruhe des Getriebes begünstigt.

Die Schlittengeschwindigkeit v folgt dabei nachstehender Gesetzmäßigkeit:

$$v = \frac{dh}{dt} = R\omega[\cos(\omega t) - \sin(\omega t)]$$

mit h = Hub, R = Zapfenabstand vom Mittelpunkt der Schwunglinie und $\omega$ = Winkelgeschwindigkeit, woraus sich für die Beschleunigung in Ableitung der Geschwindigkeit nach der Zeit herleitet

$$b = \frac{dv}{dt} = -R\omega^2[\sin(\omega t) + \cos(\omega t)]$$

Für den R in eindimensionaler Richtung Verlangernden Weg des Getriebes, den Hub h gilt dabei h = R$^\bullet$ (sin$\phi$ + cos$\phi$ -1), wobei $\phi$ den Verdrehwinkel des Schwungrades darstellt.

Der mechanische Wirkungsgrad dieses Getriebes liegt etwa bei 92 bis 96 %, bei guter Schmierung und Wälzlagerung.

Für Massenkräfte und Schwingungen gilt weiterhin hinsichtlich der Massenkraft $F_T$

$$F_T = -\sqrt{2}\, m \bullet R\omega^2[\cos(\tfrac{\Pi}{4} -\omega t]$$

wobei m = Masse des Schlittens und $\omega$ = Winkelgeschwindigkeit der Schwungscheibe ist. Die Kraft $F_T$ ändert sich dabei lediglich hinsichtlich des Vorzeichens.

Nach Vorstehendem ergibt sich eine besondere mechanische Eignung zum Einsatz in Motoren mit einer Vorverdichtung auf der Kolbenunterseite. Grundsätzlich ist dabei der Kolben starr über eine Schubstange mit dem Schlitten verbunden. Kolben und Zylinder einerseits und Schlittentrieb andererseits können räumlich voneinander getrennt und kinematisch durch die Schubstange verbunden sein. Daraus leitet sich ein besonders einfacher Aufbau derartiger Motore her. Die Durchführung der Schubstange durch den Zylinderabschluß und das Getriebegehäuse sind einfache Gleitdichtungen, Zylinder und Getriebe bilden somit getrennte Einheiten, die auch getrennt gewartet werden können.

Der Wegfall der herkömmlich in der Regel verwendeten Kurbelwelle läßt die ausgesprochen einfache Herstellung von Motoren und dergleichen zu, was für kleinere Werkstätten ohne Spezialwerkzeuge von besonderer Bedeutung ist.

Zudem kann ein erfindungsgemäß hergestellter Motor hinsichtlich der Verdichtung in weiten Grenzen geregelt werden. Da die Zylinderkolbeneinheit und das Getriebe nicht von einem gemeinsamen Gehäuse umgeben sein müssen, kann die Verstellung der Schubstangenlänge z.B. mit Hilfe von Gewindestange und Kontermuttern unschwer von außen, ohne Öffnung eines Gehäuses, vorgenommen werden.

Anhand der beiliegenden Figuren wird die vorliegende Erfindung beispielhaft erläutert.

Fig. 1 bis 8 zeigen den Bewegungsablauf der Kinematik.

Fig. 9 zeigt die Schlittenführung.

Fig. 10 zeigt eine Seitenansicht der Schlittenführung.

Fig. 11 zeigt einen Zweitakt-Boxermotor

Fig. 12 zeigt einen Viertakt-Boxermotor.

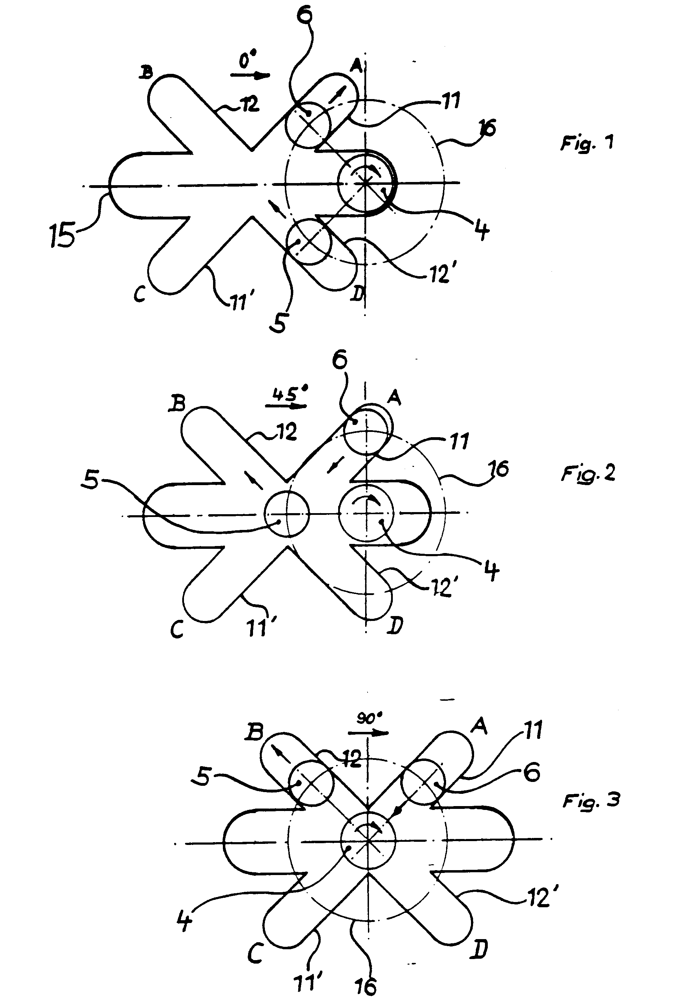

Die Figuren 1 bis 10 dienen dabei lediglich der Erläuterung des Erfindungsgegenstandes.

In Fig. 1-8 sind die Positionen der Zapfen 5 und 6 in Abständen von je 45° bei Rotation um die Achse 4 gezeigt. Die Großbuchstaben A bis D zeigen die Endstellungen der Zapfen 5 und 6 in den senkrecht zueinander angeordneten Schlitzen 11, 11', 12 und 12'. Die senkrechte strichlierte Linie deutet dabei an, daß die Achse 4 jeweils ortsfest verbleibt, der Hilfskreis 16 zeigt die Kreisbahn der Zapfen 5 und 6.

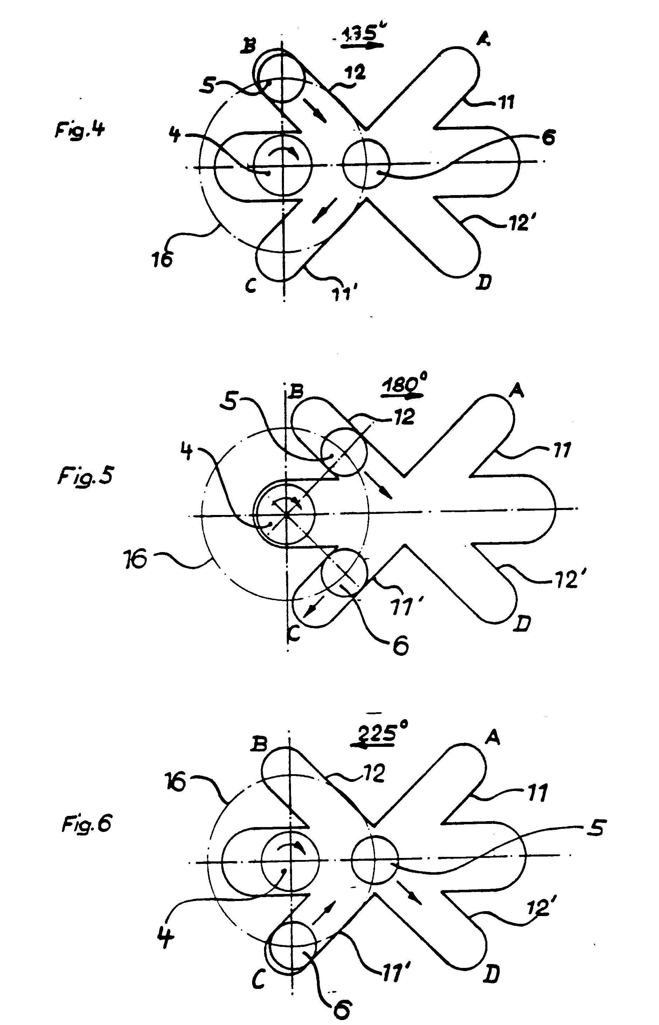

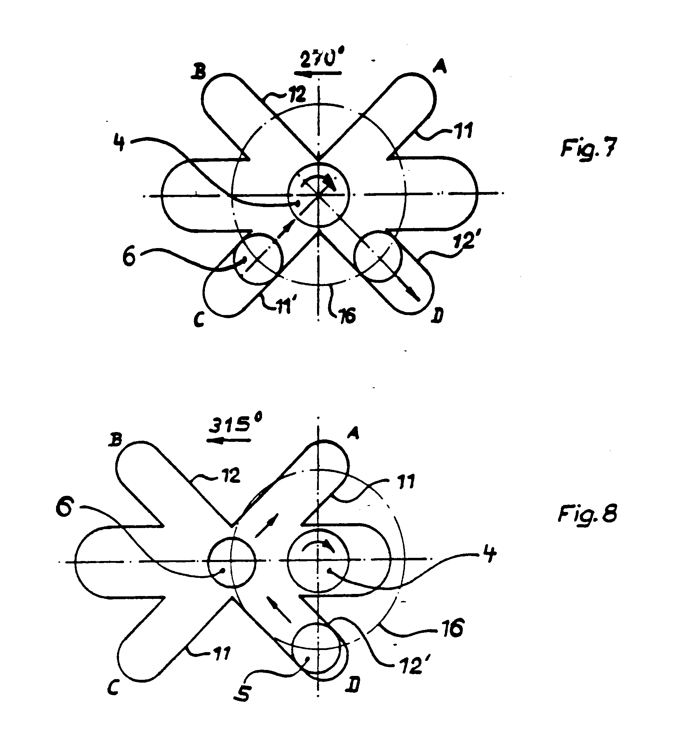

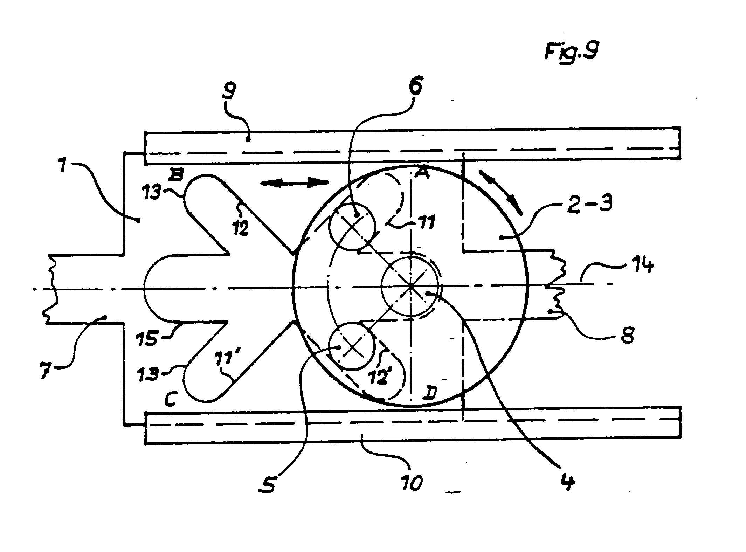

Die Schlitze 11, 11',12 und 12' sind Bestandteil eines Schlittens (Fig. 9), deren Bewegungsrichtung, wie durch den oberen Pfeil angedeutet, bei Rechtslauf der Zapfen 5, 6 um die Achse 4 bis zur Winkelstellung 180° (Fig. 5) nach rechts verläuft und sich bis 360° umkehrt, wobei in Fig. 8 die Stellung bei 315° gezeigt ist.

Wie die Fig. 1-8 deutlich zeigen, bleibt beim Durchgang durch die Öffnung des Schlitzekreuzes der jeweils andere Zapfen im Eingriff mit diesen, wie in Fig. 2, Fig. 4, Fig. 6 und Fig. 8 gezeigt ist.

Zur Ermöglichung der Relativbewegung ist der Flankenabstand geringfügig größer auszulegen als der Zapfendurchmesser, oder falls auf ihm ein Drehlager angeordnet werden soll, als dessen Durchmesser. Das gleiche gilt notwendigerweise für die bei den Positionen A,B,C,D befindlichen Halbschalen 13.

In den Fig. 1-8 ist gleichzeitig angedeutet, daß die Welle 4 mit ihrer Drehachse, um die sich die Zapfen 5,6 drehen, durch den Schlitten bzw. dessen Schlitze hindurchgehen kann, da sich diese längs der Mittelachse (Fig. 9, Pos. 14) des Schlittens relativ verlagert.

Bei dieser Anordnung ist der mittlere Freiraum, durch den die Zapfen 5,6 verlaufen, vergrößert dargestellt, da auch für die Welle 4 ein größerer Radius angenommen wird.

Selbst in diesem angenommen ungünstigen Falle ist ein ruhiger Bewegungsablauf gewährleistet, da ständig ein Zapfen an den Schlitzflanken anliegt und den Schlitten kontinuierlich antreibt.

Fig. 1 und Fig. 5 stellen gegenüberliegende Totpunkte des Schlittens dar. Sollte der Schlitten z.B. von Kolben angetrieben werden, so ist der Welle 4 und den Zapfen 5,6 zur Überwindung der Totpunkte eine Schwungscheibe zuzuordnen, oder diese sind auf einer solchen anzubringen.

Fig. 9 zeigt die Anordnung der Schlitze 11,11',12,12' in einem Schlitten 1, an dem axiale Schubstangen 7 angeordnet sind. Die Führung des Schlittens erfolgt hier mit Hilfe der Kulissen 9 und 10. Es sind andere Führungen möglich.

Die Schlittenbewegung verläuft längs der Hilfsmittellinie 14, so daß auch die Schubstangen sich lediglich linear hin- und herbewegen und die Kraftübertragung auf ein damit in Wechselwirkung stehendes Element, z.B. ein Kolben, unter Beibehaltung der Vektorrichtung und Änderung lediglich seines Vorzeichens erfolgt.

Den Zapfen 5,6 und der Welle 4 sind zwei Scheiben 2,3 zugeordnet, die als Schwungscheiben ausgelegt sein können. Die Welle 4 durchdringt in dieser Darstellung den Schlitten und läuft berührungslos im Durchbruch 15.

Die Zapfen 5,6 gehen durch den Schlitten 1 und die Scheiben 2,3 sind beidseitig des Schlittens angeordnet.

Grundsätzlich kann auf die Welle 4 verzichtet werden, da zwei gegenüberliegende Schwungscheiben auch lediglich durch die Zapfen 5,6 miteinander verbunden sein können.

Schlitten, Schlittenführung sowie Scheiben, Welle und Zapfen können in einem abgeschlossenen Ölbad laufen, die Durchführung der Schubstangen durch ein entsprechend gedichtetes Gehäuse bietet keine Schwierigkeiten, da deren Bewegung lediglich linear ist.

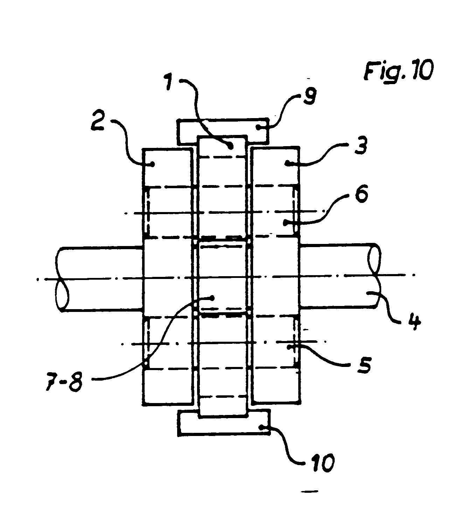

Fig. 10 zeigt die Schlittenführung der Fig. 9 in Seitenansicht (um 90° gekippt), wobei die Schubstange (7 oder 8) aus der Zeichenebene heraustritt. Der Schlitten 1 ist in den Schienen 9,10 geführt. Beidseitig sind Scheiben 2,3 angeordnet, die durch die Zapfen 5,6 und die Welle 4 miteinander verbunden sind.

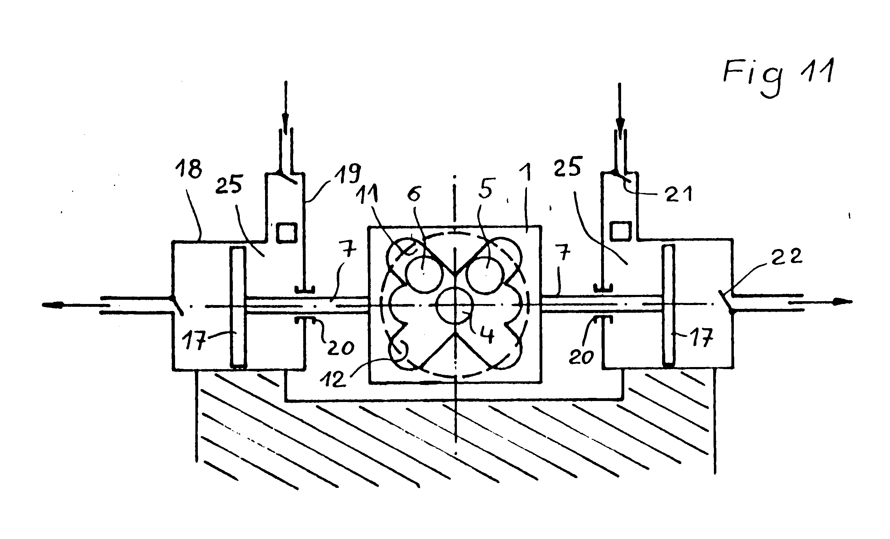

Fig. 11 zeigt als Anwendungsbeispiel einen einfach aufgebauten Verbrennungsmotor, einen Zweitakt-Boxermotor, bei dem die Kolben 17 von den Schubstangen 7 angetrieben werden. Die Schubstangen 7 sind starr zwischen den Kolben 17 und dem Schlitten 1 angeordnet.

Das Zylindergehäuse 19 ist vom Schlitten 1 bzw. dem Getriebe mit den Zapfen 5,6 und den Schlitzen 11,12 räumlich getrennt und weist eigene Dichtungen 20 auf. Die Schubstange 7 kann weiterhin längenveränderlich ausgebildet sein, beispielsweise über ein am Schlitten befindliches Innengewinde, in das ein entsprechendes Außengewinde der Schubstange eingreift. Der Kolben 17 kann zusammen mit der Schubstange somit nach Stillstand der Maschine in den Schlitten hineingeschraubt werden, um die Verdichtung zu senken und umgekehrt diese zu erhöhen. Dazu kann zur Kontrolle auf der Schubstange 7 eine Skala zur Kontrolle angebracht sein. Der Motor läßt sich daher an wechselnde Brennstoffe anpassen.

Im übrigen ist der bekannte Zweitaktmotor prinzipiell dargestellt, wobei mit 21 die Einlaßventile und mit 22 die Auslaßventile angedeutet sind.

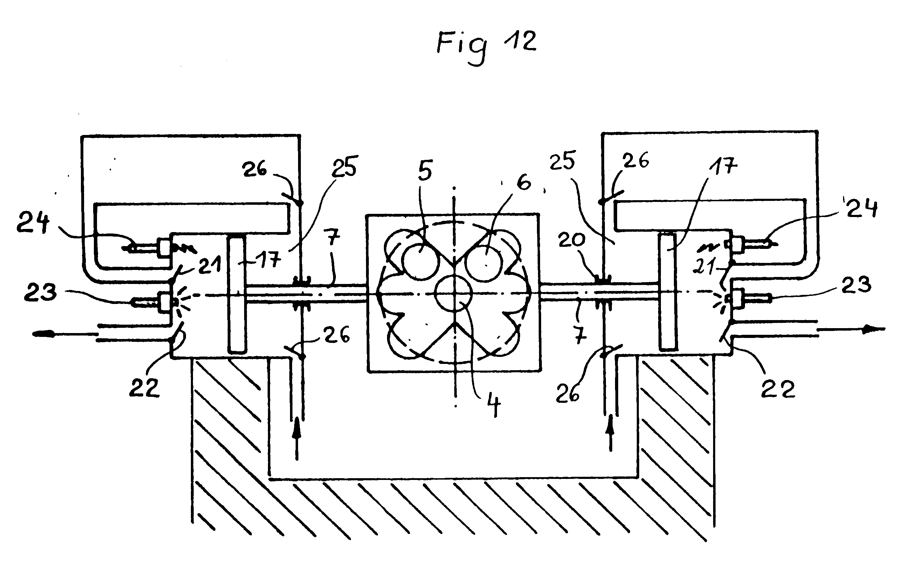

Fig. 12 zeigt schematisch einen Viertakt-Boxermotor, für den das zu Fig. 11 Gesagte weitgehend ebenfalls gilt.

Da beim Viertaktmotor eine Vorverdichtung 25 zwischengeschaltet ist, weist dieser zusätzliche Ventile 26 auf. Mit 23 ist die Einspritzung und mit 24 die Zündung angedeutet.

Die vorliegende Erfindung ist natürlich nicht auf eine Boxeranordnung beschränkt, vielmehr können die Zapfen 5,6 zwischen den Scheibenpaaren in beliebigen Winkeln zueinander angeordnet sein, so daß auch Stern, V- und Reihenmotoren ohne weiteres in gleich einfacher Weise gebaut werden können.

Die Pfeile deuten wie in Fig. 11 die Fließrichtung der Gase an.

Der besondere Vorteil der erfindungsgemäßen Motoren liegt, wie schon erwähnt, einmal in der erstmals möglichen Trennung der Zylinder/Kolben-Einheit vom Getriebe, sowie der kippfreien, starren Verbindung zwischen Kolben und Schubstange sowie andererseits dem Fehlen einer nur aufwendig herstellbaren Kurbelwelle, die erfindungsgemäß ersetzt wird aus je nach Zahl der Zylinderreihen entsprechende (Schwung) Scheibenpaare mit zwischen diesen in den nötigen Winkeln zueinander versetzten Zapfenpaaren, wobei z.B. aus Festigkeitsgründen auch eine zentrale durchgehende Welle 4 vorhanden sein kann.

**Patentansprüche**

1. Motor, bestehend aus mindestens einem Zylinder mit einem oberhalb des Kolbens (17) liegenden Verdichtungsraum sowie einem unterhalb des Kolbens liegenden Vorverdichtungsraum (25), wobei der kolben (17) durch eine Schubstange (7) mit linearer Bewegung bewegt wird und die Schubstange gegen das die Schubstange in lineare Bewegung versetzende Getriebe abgedichtet ist, **dadurch gekennzeichnet,** daß das Getriebe ein Kreuzkurbeltrieb mit einer in einem Gestell drehbaren Kurbel (2), die mit Zapfen (5, 6) im Betrieb in Schlitze (11, 12) eines Schlittens (1) eingreift, der in Kulissen (9, 10) geführt ist, wobei die Kurbel zwei unter einem Winkel von 90° zur Kurbeldrehachse angeordnete Zapfen (5, 6) aufweist, daß der Schlitten (1) zwei sich unter einem Winkel von 90° kreuzende Schlitze (11, 12) hat, die jeweils unter einem Winkel von 45° zur Schubrichtung des Schlittens (1) verlaufen und daß im Betrieb im ersten Schlitz (1) der erste Zapfen (6) und im zweiten Schlitz (12) der zweite Zapfen (5) geführt ist.

2. Motor nach Anspruch 1, **dadurch gekennzeichnet,** daß die Zapfen (5, 6) des Kreuzkurbeltriebes Drehlager aufweisen und mit den Flanken der Schlitze (11, 12) verzahnt sind.

3. Motor nach Anspruch 1 oder 2, **dadurch gekennzeichnet,** daß die Zapfen (5, 6) des Kreuzkurbeltriebes zwischen zwei Scheiben (2, 3) angeordnet sind.

4. Motor nach mindestens einem der Ansprüche 1 bis 3, **dadurch gekennzeichnet,** daß Zapfen (5, 6) und gegebenenfalls Welle (4) beabstandeten Schwungscheibenpaaren (2, 3) zugeordnet sind, die zwischen ihnen befindliche Schlitten (1) durchgreifen, wobei die benachbarten Zapfen winkelversetzt zueinander angeordnet sind.

5. Motor nach mindestens einem der Ansprüche 1 bis 4, **dadurch gekennzeichnet,** daß die Schubstangen (7) des Kreuzkurbeltriebes längenveränderlich sind.

6. Motor nach mindestens einem der Ansprüche 1 bis 5, **dadurch gekennzeichnet,** daß der Kreuzkurbeltrieb einen den Zapfenabstand R vom Rotationsmittelpunkt verlängernden Hub h = R [sin($\phi$t) + cos($\phi$t)-1] aufweist.

7. Motor nach mindestens einem der Ansprüche 1 bis 6, **dadurch gekennzeichnet,** daß der Hub des Kreuzkurbeltriebes durch Veränderung des Zapfenabstandes vom Rotationsmittelpunkt veränderbar ist.

**Claims**

1. Motor consisting of at least one cylinder with a compression chamber lying above the piston (17), as well as a pre-compression chamber (25) lying below the piston, whereby the piston (17) is moved with linear movement by a driving rod (7) and the driving rod is sealed off against the drive setting the driving rod in linear movement, characterised in that the drive is a cross-crank mechanism with a crank (2), rotatable in a frame, which, in operation, engages with pins (5, 6) in slots (11, 12) of a slide (1) which is guided in connecting members (9, 10), whereby the crank has two pins (5, 6) arranged at an angle of 90° to the axis of rotation of the crank, that the slide (1) has two slots (11, 12), crossing at an angle of 90°, each of which runs at an angle of 45° to the driving direction of the slide (1) and that, in operation, in the first slot (11) is guided the first pin (6) and in the second slot (12) the second pin (5).

2. Motor according to claim 1, characterised in that the pins (5, 6) of the cross-crank mechanism have pivot bearings and are interlocked with the slots (11, 12).

3. Motor according to claim 1 or 2, characterised in that the pins (5, 6) of the cross-crank mechanism are arranged between two plates (2, 3).

4. Motor according to at least one of claims 1 to 3, characterised in that pins (5, 6) and possibly shaft (4) are associated with distanced pairs of oscillation plates (2, 3) which pass through slides (1) present between them, whereby the neighbouring pins are arranged angularly offset to one another.

5. Motor according to at least one of claims 1 to 4, characterised in that the driving rods (7) of the cross-crank mechanism are longitudinally adjustable.

6. Motor according to at least one of claims 1 to 5, characterised in that the cross-crank mechanism has a stroke h = R [sin( $\phi$ t) + cos ( $\phi$ t) - 1] elongating the pin distance R from the rotation middle point.

7. Motor according to at least one of claims 1 to 6, characterised in that the stroke of the cross-crank mechanism is adjustable by adjustment of the pin distance from the rotation middle point.

**Revendications**

1. Moteur constitué par au moins un cylindre comportant une chambre de compression située au-dessus du piston (17) ainsi qu'une chambre de suralimentation (25) située en dessous du piston, le piston (17) étant déplace avec un mouvement linéaire par une bielle (7) et la bielle étant rendue étanche par rapport au mécanisme qui déplace la bielle dans un mouvement linéaire, caractérisé en ce que le mécanisme est un mécanisme à manivelle en croix avec une manivelle (2) qui peut tourner dans un châssis, qui entre en prise, en fonctionnement, par des boutons (5, 6) dans des rainures (11, 12) d'un coulisseau (1) guidé dans des coulisses (9, 10), la manivelle présentant deux boutons (5, 6) qui sont agencés sous un angle de 90° par rapport à l'axe de rotation de manivelle, en ce que le coulisseau (1) a deux rainures (11, 12) qui se croisent sous un angle de 90° et qui s'étendent chaque fois sous un angle de 45° par rapport à la direction de la course du coulisseau (1), et en ce qu'en fonctionnement le premier bouton (6) est guidé dans la première rainure (1) et le second bouton (5) dans la seconde rainure (12).

2. Moteur suivant la revendication 1, caractérise en ce que les boutons (5, 6) du mécanisme à manivelle en croix présentent des coussinets de pivotement et sont endentés avec les flancs des rainures (11, 12).

3. Moteur suivant l'une ou l'autre des revendications 1 et 2, caractérisé en ce que les boutons (5, 6) du mécanisme à manivelle en croix sont agencés entre deux disques (2, 3).

4. Moteur suivant au moins l'une des revendications 1 à 3, caractérise en ce que les boutons (5, 6) et éventuellement l'arbre (4) sont adjoints à des paires de disques de volant écartés (2, 3) et ils traversent le coulisseau se trouvant entre ces derniers, les boutons voisins étant agencés de façon angulairement décalés l'un par rapport à l'autre.

5. Moteur suivant au moins l'une des revendications 1 à 4, caractérisé en ce que les bielles (7) du mécanisme à manivelle en croix sont modifiables en longueur.

6. Moteur suivant au moins l'une des revendications 1 à 5, caractérisé en ce que le mécanisme à manivelle en croix présente une course h = R [sin($\phi$t) + cos($\phi$ t) - 1] qui s'allonge de la distance R entre bouton et centre de rotation.

7. Moteur suivant au moins l'une des revendications 1 à 6, caractérisé en ce que la course du mécanisme à manivelle en croix peut être modifiée par modification de la distance entre bouton et centre de rotation.

Fig. 1

Fig. 2

Fig. 3

Fig.4

Fig.5

Fig.6

Fig. 7

Fig. 8

Fig.9

Fig. 10

Fig 11

Fig 12